# EUROPEAN PATENT APPLICATION

(11) **EP 0 616 925 A1**
(43) Date of publication of application: **28.09.1994**
(21) Application number: 94301560.2
(22) Date of filing: 04.03.1994
(51) Int. Cl.: B60R 21/20

(54) **Improvements in and relating to air bag restraint systems**

(30) Priority: 24.03.1993 GB 9306064
(71) Applicant: JAGUAR CARS LIMITED, Allesley Coventry CV5 9DR West Midlands (GB)
(72) Inventor: Skidmore, Gerald Peter, Nuneaton CV10 9SB (GB)
(74) Representative: Watts, Peter Graham

(57) **Abstract**

A cover (10) for an air bag module (11) includes a hinge formation (15) having a first hinge member (16) adapted to be secured to a cover panel (12) and a second hinge member (17) connected to a suitable support structure. The first and second hinge members (16,17) have abutment means (30,22) which will engage one another when the cover panel (12) is in a closed position, a shear element (21) is associated with one of the hinge members (16) and engages a formation (23) on the other hinge member (17), said shear element (21) retaining the cover panel (12) in said closed position and being adapted to shear upon a load being applied to the cover panel (12) upon inflation of the air bag, to permit the cover panel (12) to pivot about the hinge formation (15) to an open position, thereby permitting deployment of the air bag.

## Description

The present invention relates to improvements in or relating to air bag restraint systems.

In air bag restraint systems for vehicles, the air bags are located behind covers formed in trim panels, so that upon inflation of the air bag, the bag will burst through the cover and be deployed in front of the occupant of the vehicle.

It is desirable that such covers remain closed until the air bag is deployed, in order to avoid the possibility that the air bag may be interfered with which may lead to malfunctioning, when the need for deployment of the air bag arises. Hitherto this has been achieved by having a hinge formation along one edge of the cover and a frangible seam along an opposite edge of the cover. With this form of construction, the cover must be attached to an element defining a hinge formation and a frangible seam, which must then be secured along the opposite edges to support members. This must be done without disrupting the frangible seam and in the past it has been proposed to use a sub-frame, to which the cover may be secured prior to assembling it into the vehicle, the cover being located in position in the vehicle by means of the sub-frame.

According to one aspect of the present invention, a cover for an air bag module of an air bag restraint system includes a hinge formation, the hinge formation comprising first and second hinge members pivotally connected together, the first hinge member being adapted to be secured to a cover panel and the second hinge member being adapted to be connected to a suitable support structure; characterised in that the first and second hinge members have abutment means which will engage one another when the cover panel is in a closed position, a shear element being associated with one of said hinge members, the shear element engaging a formation on the other hinge member, the shear element retaining the cover panel in said closed position and being adapted to shear upon a load being applied to the cover panel upon inflation of the air bag, to permit the cover panel to pivot about the hinge formation to an open position, to permit deployment of the air bag.

In accordance with the present invention, the cover panel is only secured along one edge, the shear element associated with the hinge formation maintaining the cover panel in its closed position until the air bag is inflated. Location of the shear element on the hinge will also increase the leverage applied to the shear element when the air bag is inflated, consequently the shear element may be more robust than the frangible seams used hitherto. As a consequence there is less likelihood of damage to the shear element while the cover is being fitted and there is no need for a supporting frame.

An embodiment of the invention is now described, by way of example only, with reference to the accompanying drawings, in which:-
Figure 1 is a sectional side elevation of an air bag cover in accordance with the present invention;

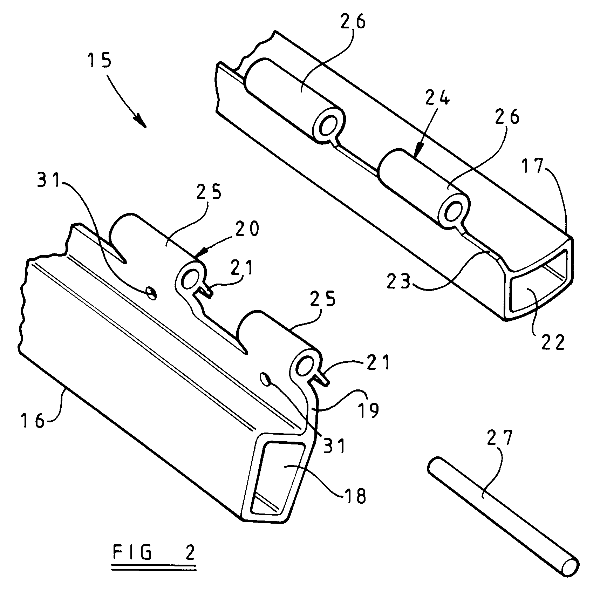

Figure 2 is an exploded isometric view of a hinge used in the cover illustrated in Figure 1.

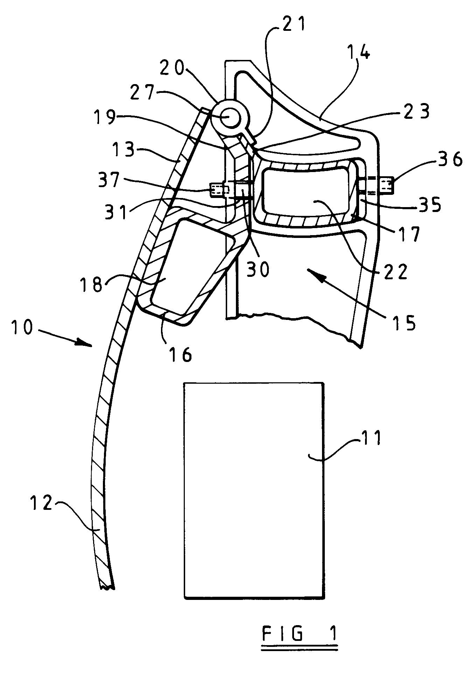

As illustrated in Figure 1, a cover 10 for an air bag module 11 comprises a cover panel 12 which is secured along its upper edge 13 to a suitable support structure, by means of a hinge assembly 15. The hinge assembly 15 comprises first and second hinge members 16, 17 extruded from aluminium. The first hinge member 16 has a body portion 18 of hollow section with a web portion 19 extending longitudinally of the body portion 18, a tubular formation 20 being formed along the edge of the web portion 19 remote from the body portion 18. A web formation 21 extends from the tubular formation 20 towards the body portion 18, the web formation 21 being parallel to but spaced from the web portion 19.

The second hinge member 17 has a body portion 22 of hollow section with a web portion 23 extending longitudinally from the body portion 22, a tubular formation 24, of the same cross-section as tubular formation 20, being formed along the edge of the web portion 23 remote from the body portion 22.

Sections of the tubular formation 20, web formation 21 and part of the web portion 19 of a first hinge member 16 and the tubular formation 24 and part of the web portion 23 of second hinge member 17 are cut away to leave a plurality of sections 25, 26 respectively, so that the sections 25 of the first hinge member 16 will locate between section 26 of the second member 17. Hinge members 16 and 17 of the hinge assembly may thus be pivotally connected together with a hinge pin 27 which locates through the bores of the alternating sections 25, 26 of the tubular formations 20, 24.

The web formation 21 of hinge member 16 is dimensioned so that it will engage the remaining part of the cut-out portion of the web portion 23 of hinge member 17, thereby opposing pivoting of the hinge member 16 away from the hinge member 17. The web formation 21 of hinge member 16 is of a thickness such that when a predetermined load is applied to the cover panel 12 by inflation of the air bag, the web formation 21 will shear, permitting the hinge member 16 to pivot away from the hinge member 17 allowing the cover panel 12 to open and the air bag to be deployed. The web formation 21 may be tuned to shear at the appropriate predetermined load by, for example, providing a longitudinal groove along the shear line or by cutting the web formation 21 to form a series of tags.

A pair of grub screws 30 engage in threaded aperture 31 in the web portion of hinge member 16, so that when the cover panel 12 is in a closed position the grub screws 30 will engage the body portion 22 of hinge member 17 thereby preventing rearward movement of the cover panel 12. The grub screws 30 permit adjustment of the closed position of the cover panel 12 to accommodate tolerance variations in the thickness of web portion 23 and spacing between web portion 19 and web formation 21, so that in the closed position, the web portion 23 will abut against the web formation 21, thereby avoiding rattles.

The hinge assembly 15 is secured to the support structure of the vehicle by means of a pair of end brackets 14. The ends of the hollow section body portion 22 of hinge member 17 engaging in slots 35 in the end brackets 14. The upper and lower edges of the body portion 22 of hinge member 17, slidingly engage the corresponding walls of the slots 35 and the slot 35 are elongated in the forward/rearward direction to permit some forward/rearward movement of the hinge assembly 15. A pair of grub screws 36, 37 engage in threaded apertures in front and rear walls of the slots 35, so that the screws may engage the front and rear edges of the body portion 22 of hinge member 17, to adjust the forward/ rearward position of the hinge assembly and thereby align the cover panel with the surrounding vehicle trim.

Various modifications may be made without departing from the invention. For example, instead of forming the shear element as an integral part of one of the hinge members of the hinge assembly, shear pins or the like may be located in apertures in the tubular formation 20 of hinge member 16 to take the place of the web formation 21. Alternatively, portions of the hinge members 16 and 17 may be secured together by means of shear pins or the like. While the position of the shear element may be varied, it is preferably located such that the portion sheared off will be retained in or behind the hinge assembly and will not be free to be thrown out into the passenger compartment. While for lightness, the body portions of the hinge assembly described above are of hollow section, the members may be of any suitable alternative configuration.

## Claims

1. A cover (10) for an air bag module (11) of an air bag restraint system including a hinge formation (15), the hinge formation (15) comprising first and second hinge members (16, 17) pivotally connected together, the first hinge member (16) being adapted to be secured to a cover panel (12) and the second hinge member (17) being adapted to be connected to a suitable support structure; characterised in that the first and second hinge members (16, 17) have abutment means (31, 22) which will engage one another when the cover panel (12) is in a closed position, a shear element (21) being associated with one of said hinge members (16), the shear element (21) engaging a formation (23) on the other hinge member (17), the shear element (21) retaining the cover panel (12) in said closed position and being adapted to shear upon a load being applied to the cover panel (12) upon inflation of the air bag, to permit the cover panel (12) to pivot about the hinge formation (15) to an open position, to permit deployment of the air bag.

2. A cover (10) according to Claim 1 characterised in that the shear element (21) is arranged such that upon shearing, the parts of the shear element (21) will be retained in or behind the hinge assembly (15).

3. A cover (10) according to Claim 1 or 2 characterised in that the shear element (21) comprises an integral formation on the first hinge member (16), said formation (21) engaging a complimentary formation (23) on the second hinge member (17) when the cover panel (12) is in its closed position.

4. A cover (10) according to Claim 3 characterised in that the first and second hinge members (16, 17) have web portions (19,23) which are interconnected by pivot means (25, 26, 27), a web formation (21) being provided on the first hinge member (16) which extends parallel to but is spaced from the web portion (19) thereof, the web portion (23) the second member (17) engaging between the web portion (19) and web formation (21) on the first member (16), so that engagement of the web portion (23) on the second member (17) with the web formation (21) of the first member (16) will prevent the cover panel (12) from being pivoted from its closed to its open position, the web formation (21) being adapted to shear when a load is applied to the cover panel (12) by inflation of the air bag.

5. A cover (10) according to Claim 4 characterised in that screw adjustment means (31) on one hinge member (16) abuts the other hinge member (17) when the cover panel (12) is in its closed position.

6. A cover (10) according to any one of the preceding claims characterised in that the first and second hinge members (16, 17) are formed from extrusions.

7. A cover (10) according to any one of the preceding claims characterised in that the shear element (21) is tuned to shear when a predetermined load is applied to the cover panel (12) upon inflation of the air bag.

8. A cover (10) according to any one of the preceding claims characterised in that the hinge assembly (15) is adjustably mounted with respect to the vehicle.

9. A cover (10) according to claim 8 characterised in that the second hinge member (17) is connected to a support structure by means of a pair of end brackets (14), the body portion (22) of the second hinge member (17) being slidably located in slots (35) in the end brackets (14) for forward/rearward movement thereof, adjustable means (36, 37) being provided to locate the body portion (22) in the slots (35) in the forward/rearward direction.
